(19) Europäisches Patentamt
European Patent Office
Office européen des brevets

(11) **EP 4 775 046 A1**

(12) **EUROPEAN PATENT APPLICATION**
published in accordance with Art. 153(4) EPC

(43) Date of publication:
**15.07.2026 Bulletin 2026/29**

(21) Application number: **24862664.0**

(22) Date of filing: **28.08.2024**

(51) International Patent Classification (IPC):
*A23L 29/281* (2016.01)  *A23F 3/16* (2006.01)
*A23F 5/24* (2006.01)  *A23L 2/52* (2006.01)
*A23L 2/66* (2006.01)  *A23L 2/70* (2006.01)
*A23L 5/00* (2016.01)  *A23L 33/18* (2016.01)
*C12G 1/00* (2019.01)  *C12G 3/04* (2019.01)

(52) Cooperative Patent Classification (CPC):
A23F 3/16; A23F 5/24; A23L 2/52; A23L 2/66;
A23L 2/70; A23L 5/00; A23L 29/281; A23L 33/18;
C12G 1/00; C12G 3/04

(86) International application number:
**PCT/JP2024/030641**

(87) International publication number:
**WO 2025/053012 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 JP 2023145283**

(71) Applicant: Nitta Gelatin Inc.
Osaka 556-0022 (JP)

(72) Inventors:
• **NISHI, Chise**
Yao-shi, Osaka 581-0024 (JP)
• **MORIOKA, Yasuo**
Yao-shi, Osaka 581-0024 (JP)

(74) Representative: **Vossius & Partner
Patentanwälte Rechtsanwälte mbB
Siebertstraße 3
81675 München (DE)**

(54) **FOOD OR BEVERAGE CONTAINING POLYPHENOL, COLLAGEN PEPTIDE AND GELATIN**

(57)    The object is to provide a food or beverage in which cloudiness caused by a reaction between polyphenol and a collagen peptide is suppressed, and which has a good flavor. The food or beverage comprising a polyphenol, and a collagen peptide, and further comprising gelatin, wherein an isoelectric point (X) of the gelatin and a pH (Y) of the food or beverage satisfy a relationship of formula 1.

EP 4 775 046 A1

## Description

### TECHNICAL FIELD

The present disclosure relates to a food or beverage containing a polyphenol, a collagen peptide, and gelatin.

### BACKGROUND ART

Conventionally, there has been a problem that food and beverages containing polyphenols and collagen peptides become cloudy. PTLs 1 to 6 disclose methods in which the molecular weight and the pH of a collagen peptide, and an additive are adjusted for suppressing occurrence of the cloudiness.

PTLs 1 and 2 disclose that the cloudiness of a food and beverage can be suppressed by adjusting the molecular weight of a collagen peptide to be high. High-molecular-weight collagen peptides are, however, not common and are not available on the market and often have lower functionality compared to low-molecular-weight collagen peptides, which are unsuitable for products that guarantee functionality in many cases. In addition, there is a problem that the high-molecular-weight collagen peptides have a gelling ability, which makes it difficult to be added to a beverage in a large amount.

PTL 3 discloses that the cloudiness of a food and beverage can be suppressed by adjusting the pH of the beverage to alkaline (pH 7.5 or more) with a basic amino acid. However, since the pH of general food and beverages is in the neutral range (pH 5 to 7), the applicable range is very narrow. Moreover, it is necessary to list the basic amino acid, which is not originally required for addition, as a food additive.

PTLs 4, 5, and 6 disclose that the cloudiness of a food and beverage can be suppressed by adding an additive such as an organic acid or pectin. It is, however, necessary to list the organic acid or pectin, which is not originally required for addition, as an additive on the food labeling. Besides, PTL 6 discloses that the cloudiness can be suppressed by adjusting the molecular weight of a collagen peptide to be low. It is, however, presumed that the cloudiness is suppressed by performing pH adjustment with citric acid (an organic acid).

### CITATION LIST

### PATENT LITERATURE

PTL 1: Japanese Patent Laying-Open No. 2019-62771
PTL 2: Japanese Patent Laying-Open No. 2015-154758
PTL 3: Japanese Patent Laying-Open No. 2008-79565
PTL 4: Japanese Patent Laying-Open No. 2019-10087
PTL 5: Japanese Patent Laying-Open No. 2002-27957
PTL 6: Japanese Patent Laying-Open No. 2002-51734

### SUMMARY OF INVENTION

### TECHNICAL PROBLEM

Both the polyphenol market and the collagen peptide market are growing markets. Besides, polyphenols and collagen peptides each have unique functionalities, and hence are being actively applied to food products. However, there has been a problem that when a collagen peptide is added to a beverage containing a polyphenol, cloudiness is likely to occur. Although several means for suppressing the cloudiness of food or beverages have already been developed in PTLs 1 through 6 as described above, the aforementioned problems have remained. Consequently, there remains a problem of cloudiness easily occurring when a collagen peptide with a general molecular weight (Mw of 700 to 9,600) is added in a neutral pH range (pH 5 to 7), which is typical for food or beverages. Therefore, other means for suppressing the cloudiness caused by a polyphenol and a collagen peptide is demanded. Additionally, the flavor of a food or beverage may be easily impaired due to a collagen peptide.

An object of the present disclosure is to provide a food or beverage in which cloudiness caused by a polyphenol and a collagen peptide is suppressed, and which has a good flavor.

### SOLUTION TO PROBLEM

A food or beverage according to one aspect of the present disclosure is a food or beverage comprising a polyphenol, and a collagen peptide, and further comprising gelatin, wherein an isoelectric point (X) of the gelatin and a pH (Y) of the food or beverage satisfy a relationship of the following formula 1:

$$X \le Y \quad \text{Formula 1}$$

ADVANTAGEOUS EFFECTS OF INVENTION

According to the present disclosure, a food or beverage in which cloudiness caused by a polyphenol and a collagen peptide is suppressed, and which has a good flavor can be provided.

DESCRIPTION OF EMBODIMENTS

[Description of Embodiments of Present Disclosure]
First, embodiments of the present disclosure will be listed and described.

[1] A food or beverage according to one aspect of the present disclosure is a food or beverage comprising a polyphenol, and a collagen peptide, and further comprising gelatin,
wherein an isoelectric point (X) of the gelatin and a pH (Y) of the food or beverage satisfy a relationship of the following formula 1:

$$X \le Y \quad \text{Formula 1}$$

According to the present disclosure, a food or beverage in which cloudiness caused by a polyphenol and a collagen peptide is suppressed, and which has a good flavor can be provided.
[2] In [1] above, an average molecular weight of the collagen peptide may be 700 or more and 9,600 or less.
[3] In [1] or [2] above, an average molecular weight of the gelatin may be 12,000 or more and 500,000 or less.
[4] In any one of [1] to [3] above, a content of the polyphenol may be more than 0% by mass and 1.0% by mass or less.
[5] In any one of [1] to [4] above, a content of the collagen peptide may be more than 0% by mass and 10.0% by mass or less.
[6] In any one of [1] to [5] above, a content of the gelatin may be more than 0% by mass and 5.0% by mass or less.
[7] In any one of [1] to [6] above, the X may be 4.8 or more and 10.0 or less, and the Y may be 4.8 or more.
[8] In any one of [1] to [7] above, the polyphenol is a plant-derived polyphenol, and
the plant-derived polyphenol may be selected from the group consisting of oleuropein, flavonoid, phenolic acid, ellagic acid, lignan, curcumin, and coumarin.
[9] In any one of [1] to [8] above, the food or beverage may be a beverage or jelly.
[10] In [9] above, the beverage may be selected from the group consisting of black tea, green tea, coffee, wine, and grape juice.

[Details of Embodiments of Present Disclosure]

Now, an embodiment of the present disclosure (hereinafter referred to as the "present embodiment") will be described. However, the present embodiment is not limited by the following description. Herein, the notation "A to B" means the upper and lower limits of a range (namely, A or more and B or less), and when no unit is specified for A but a unit is specified only for B, the unit for A is the same as the unit for B.

[Embodiment 1: Food or Beverage]

A food or beverage according to the present embodiment is a food or beverage comprising a polyphenol, and a collagen peptide, and further comprising gelatin, wherein an isoelectric point (X) of the gelatin and a pH (Y) of the food or beverage satisfy a relationship of the following formula 1:

$$X \le Y \quad \text{Formula 1}$$

The present disclosure can provide a food or beverage in which cloudiness caused by a polyphenol and a collagen peptide is suppressed, and which has a good flavor. The reasons are presumed to be as follows.

(a) When the pH of the food or beverage is lower than the isoelectric point (4.8 to 10.0) of the collagen peptide, the collagen peptide is positively charged. Therefore, the collagen peptide tends to react with the negatively charged polyphenol, which can easily lead to the occurrence of cloudiness. Since the isoelectric point of a collagen peptide has a broad peak, when the pH of the food or beverage is, for example, in a neutral range (pH 5 to 7), a part of the collagen peptide is positively charged, leading to the occurrence of cloudiness.

The food or beverage of the present embodiment further comprises gelatin, and the isoelectric point (X) of the gelatin and the pH (Y) of the food or beverage satisfy the relationship of formula 1 above. It is presumed that this allows the gelatin to be negatively charged or be in a neutral state, and hence does not react with the polyphenol, but instead, acts as a protective colloid for a complex of the collagen peptide and the polyphenol, resulting in reducing the cloudiness. Gelatin is advantageous to other compounds capable of forming a protective colloid with the complex of the collagen peptide and the polyphenol (e.g., pectin, sodium polyacrylate, sodium alginate, polyglyceryl esters) in that gelatin has a high effect of removing cloudiness, that there is no need to list the gelatin as an additive in nutritional labeling because it is the same type of protein as the collagen peptide, and that gelatin has a high effect of improving flavor.

(b) A food or beverage containing a polyphenol and a collagen peptide may be degraded in flavor due to the collagen peptide.

The food or beverage of the present embodiment further comprises gelatin, and the isoelectric point (X) of the gelatin and the pH (Y) of the food or beverage satisfy the relationship of formula 1 above. As a result, the gelatin has a masking effect, and therefore, the flavor of the food or beverage containing the polyphenol and the collagen peptide can be improved.

In this manner, according to the present disclosure, a food or beverage in which cloudiness caused by a polyphenol and a collagen peptide is suppressed, and which has a good flavor can be provided.

Furthermore, the food or beverage of the present disclosure has advantages that the collagen peptide can be added in a neutral range in a state where any additives except for the collagen protein is not added; that the collagen peptide can be added in a large amount; that a highly functional, low-molecular-weight collagen peptide can be added; that an acid-treated collagen peptide that is highly functional and widely available on the market can be added; and the like.

<<Food or Beverage>>

In the present disclosure, the term "food or beverage" means, for example, a beverage, jelly and the like. Besides, the term "food or beverage" is a concept that includes not only a food or beverage as a final product but also a food or beverage as an intermediate product. The intermediate product can be in the form of a powder, a concentrate, or a solid.

The food or beverage may be a beverage or jelly. Here, examples of the "jelly" include black tea jelly, green tea jelly, coffee jelly, wine jelly, and grape jelly. Such jelly may be an unsweetened product, may be a sweetened product, may contain a flavoring and/or fruit juice, and may also contain other components generally contained in jelly.

The beverage may be selected from the group consisting of black tea, green tea, coffee, wine, and grape juice. Such a beverage may be an unsweetened product, may be a sweetened product, may contain a flavoring and/or fruit juice, and may also contain other components generally contained in a beverage.

The pH (Y) of the food or beverage may be 4.8 or more. The lower limit of the pH (Y) of the food or beverage may be 4.8 or more, 5.0 or more, or 6.0 or more. The upper limit of the pH (Y) of the food or beverage may be 10.0 or less, 9.0 or less, or 8.0 or less. The pH (Y) of the food or beverage may be 4.8 or more and 10.0 or less, 5.0 or more and 9.0 or less, or 6.0 or more and 8.0 or less.

The pH (Y) of the food or beverage can be specified by "Methods for determination of pH of aqueous solutions (Z 8802:2011)" of the JIS Standard.

<<Polyphenol>>

The food or beverage comprises a polyphenol. As a result, owing to the excellent antioxidant property of the polyphenol, a sterilizing effect, a blood cholesterol-lowering effect, a hypertension preventing effect, an effect of enhancing liver function, an effect of relieving eye fatigue, an anti-aging effect, an effect of improving digestive and metabolic diseases, a skin-whitening effect, and the like can be improved in the food or beverage.

A content of the polyphenol may be more than 0% by mass and 1.0% by mass or less. The lower limit of the content of the polyphenol may be more than 0% by mass, 0.028% by mass or more, 0.029% by mass or more, 0.030% by mass or more, 0.031% by mass or more, 0.1% by mass or more, or 0.2% by mass or more. The upper limit of the content of the polyphenol may be 1.0% by mass or less, 0.9% by mass or less, or 0.8% by mass or less. The content of the polyphenol may be 0.028% by mass or more and 1.0% by mass or less, 0.029% by mass or more and 1.0% by mass or less, 0.030% by mass or more and 1.0% by mass or less, 0.031% by mass or more and 1.0% by mass or less, 0.1% by mass or more and 0.9% by mass or less, or 0.2% by mass or more and 0.8% by mass or less.

The content of the polyphenol can be specified by the Folin-Ciocalteu method.

The polyphenol may be a plant-derived polyphenol.

The plant-derived polyphenol may be selected from the group consisting of oleuropein, flavonoid, phenolic acid, ellagic acid, lignan, curcumin, and coumarin. Examples of the flavonoid include catechin, theaflavin, thearubigin, anthocyanin, proanthocyanidin, tannin, rutin, and isoflavone. An example of the phenolic acid includes chlorogenic acid.

<<Collagen Peptide>>

The food or beverage comprises a collagen peptide. It is known that ingesting a collagen peptide as a food can increase the blood concentration of functional dipeptides and tripeptides. Therefore, in such a food or beverage, it is possible to improve a skin-beautifying effect, an effect of suppressing joint pain, an effect of improving bone density, an effect of suppressing blood sugar level increase, an effect of increasing muscle mass, an effect of improving pressure ulcers, a blood pressure suppressing effect, and the like. In the present disclosure, the term "collagen peptide" means a compound that meets the "Edible Collagen Peptide Standards" of GMJ. Besides, in the present disclosure, the collagen peptide may be an alkali-treated collagen peptide or an acid-treated collagen peptide. In the present disclosure, the collagen peptide may be a peptide derived from the extracellular matrix of the skin or the like of a vertebrate, which is classified into first to sixth groups described below.

Commercially available collagen peptides have an average molecular weight of 700 or more and 9,600 or less, and one having a lower molecular weight tends to have a higher functional effect. It is collagen peptides having an average molecular weight of 3,000 to 5,000 that have a particularly large market share. In a high molecular weight range of an average molecular weight of 9,600 or more, the properties of gelatin become stronger, and while the functional effects as the collagen peptide decrease, a gelling effect is achieved.

A content of the collagen peptide may be more than 0% by mass and 10.0% by mass or less. The lower limit of the content of the collagen peptide may be more than 0% by mass, 0.10% by mass or more, or 0.20% by mass or more. The upper limit of the content of the collagen peptide may be 10.0% by mass or less, 5.0% by mass or less, or 2.0% by mass or less. The content of the collagen peptide may be 0.10% by mass or more and 5.0% by mass or less, or 0.20% by mass or more and 2.0% by mass or less.

An average molecular weight of the collagen peptide may be 700 or more and 9,600 or less.

The average molecular weight of the collagen peptide can be specified by the "GMJ Method" by the Gel Permeation Chromatography (GPC) method, which is described in the Edible Collagen Peptide Standards of Gelatin Manufacturers Association of Japan (GMJ).

<<Gelatin>>

The food or beverage further comprises gelatin. Thus, the cloudiness occurring in the food or beverage comprising the polyphenol and the collagen peptide can be improved, and in addition, the flavor can be improved. Besides, the collagen peptide and the gelatin are the same type of protein, and hence there is no need to contain other additives for removing the cloudiness, and therefore, there is no need to list an additive in the food labeling. In the present disclosure, the term "gelatin" is a concept that includes polypeptides in which the triple helix structure of collagen has been unraveled by heat denaturation, acid denaturation, or the like, as well as chemically modified products thereof and the pharmaceutically acceptable salts thereof, and means those that meet the specifications of the Japanese Pharmacopoeia. Specifically, gelatin can be obtained by subjecting collagen derived from at least one selected from the group consisting of the first to sixth groups described below to a conventionally known treatment such as defatting treatment, demineralization treatment, acid or alkaline treatment, or hot water extraction treatment. Among these, gelatin with an isoelectric point lowered by alkali treatment is called alkali-treated gelatin, while gelatin that has not undergone alkali treatment and has an isoelectric point not lowered is called acid-treated gelatin.

The gelatin may also be a polypeptide obtained by a fermentation method using a microorganism, a recombinant polypeptide obtained by chemical synthesis or genetic engineering, or a synthesized polypeptide. In the present disclosure, the term "collagen" refers to a protein derived from the extracellular matrix of the skin or the like of a vertebrate, which is classified into the following first to sixth groups. Collagen has a right-handed helical structure consisting of three peptide chains, and amino acid residues that constitute the peptide chains have a primary structure (a so-called collagen-like sequence) in which a glycine residue is repeated every three residues.

First group: group consisting of the hide, skin, bones, cartilage, and tendons of a bovine
Second group: group consisting of the hide, skin, bones, cartilage, and tendons of a pig
Third group: group consisting of the hide, skin, bones, cartilage, and tendons of sheep
Fourth group: group consisting of the hide, skin, bones, cartilage, and tendons of a chicken
Fifth group: group consisting of the hide, skin, bones, cartilage, and tendons of an ostrich
Sixth group: group consisting of the bones, skin, and scales of fish

A "chemically modified product" of the polypeptide (gelatin) described above means a polypeptide in which an amino group, a carboxyl group, a hydroxyl group, a thiol group, or the like of an amino acid residue constituting the gelatin have been chemically modified. Chemically modified gelatin can have solubility in water, isoelectric point, and the like thereof changed. Specifically, chemical modification such as O-acetylation can be performed on a hydroxyl group of a hydroxyproline residue in gelatin. On the $\alpha$-carboxyl group of a glycine residue in gelatin, chemical modification such as esterification or amidation can be performed. On an $\alpha$-amino group of a proline residue in gelatin, chemical modification such as polypeptidylation, succinylation, maleation, acetylation, deamination, benzoylation, alkylsulfonylation, allylsulfonylation, dinitrophenylation, trinitrophenylation, carbamylation, phenylcarbamylation, or thiolation can be performed.

Conventionally known chemical modification methods can be applied for a specific means and treatment conditions of the chemical modification of gelatin. For the chemical modification of a hydroxyl group of a hydroxyproline residue, for example, O-acetylation can be performed by reaction with acetic anhydride in an aqueous solvent or a non-aqueous solvent. For the chemical modification of an $\alpha$-carboxyl group of a glycine residue, for example, esterification can be performed by suspension in methanol and then bubbling dry hydrogen chloride gas through the resultant. For the chemical modification of an $\alpha$-carboxyl group of a glycine residue, amidation can be performed by reaction with carbodiimide or the like.

Examples of a "derivative" of the polypeptide (gelatin) may include, a gelatin derivative with a functional group introduced into gelatin, a copolymer of gelatin with lactic acid, glycolic acid, or the like, and a copolymer of gelatin with polyethylene glycol or propylene glycol. Examples of the gelatin derivative include derivatives obtained by introducing, into gelatin, functional groups such as a guanidyl group, a thiol group, an amino group, a carboxyl group, a sulfate group, a phosphate group, an alkyl group, an acyl group, a phenyl group, and a benzyl group.

A "pharmaceutically acceptable salt" of the polypeptide (gelatin) means a salt that is pharmaceutically acceptable and possesses a desired activity (for example, gelling ability) of the original polypeptide (gelatin). Examples of the pharmaceutically acceptable salt include inorganic acid salts such as hydrochloride, sulfate, phosphate, and hydrobromide; organic acid salts such as acetate, methanesulfonate, benzenesulfonate, p-toluenesulfonate, succinate, oxalate, fumarate, and maleate; inorganic base salts such as a sodium salt, a potassium salt, and a calcium salt; and organic base salts such as a triethylammonium salt. A specific peptide within gelatin can be converted into a pharmaceutically acceptable salt by a usual method.

A content of the gelatin may be more than 0% by mass and 5.0% by mass or less. The lower limit of the content of the gelatin may be more than 0% by mass, 0.01% by mass or more, or 0.05% by mass or more. The upper limit of the content of the gelatin may be 5.0% by mass or less, 4.0% by mass or less, or 3.0% by mass or less. The content of the gelatin may be 0.01% by mass or more and 4.0% by mass or less, or 0.05% by mass or more and 3.0% by mass or less.

The isoelectric point (X) of the gelatin may be 4.8 or more and 10.0 or less. In the present disclosure, the isoelectric point (X) of the gelatin means an average pH value of the isoelectric points of respective gelatin molecules. The isoelectric point (X) of the gelatin may be 5.0 or more and 8.0 or less.

The isoelectric point (X) of the gelatin can be specified by the following method.

(A2) After adding 3.00 g of isolated gelatin and 147 mL of ion-exchanged water to a 200 mL beaker, the resultant mixture is left to stand for 30 minutes or more to obtain a swollen sample.

(B2) The "swollen sample" is stirred under a condition of 45°C for 30 minutes to obtain a gelatin aqueous solution.

(C2) A cationic resin is added to the gelatin aqueous solution, and the resultant mixture is then stirred for 5 minutes.

(D2) An anionic resin is further added to the gelatin aqueous solution, and the resultant mixture is stirred for 15 minutes. After stopping the stirring, the cationic resin and anionic resin are allowed to precipitate, and a supernatant is obtained.

(E2) The conductivity of the supernatant is measured to confirm that the conductivity is 15 $\mu$S/cm or less.

(F2) The supernatant is gently transferred to a 100 mL beaker, and the pH of the supernatant is measured under a condition of 35°C. This pH is defined as the isoelectric point (X) of the gelatin.

An average molecular weight of the gelatin may be 12,000 or more and 500,000 or less.

The average molecular weight of the gelatin can be specified by the PAGI (Photographic and Gelatin Industries) method by the GPC method, as defined by Photographic and Gelatin Industries Joint Committee.

<<Other Components>>

The food or beverage may comprise other components as long as the effects of the present invention are exhibited. Examples of the other components include sugar, baking soda, citric acid, vitamin C, a flavoring, a seasoning (such as amino acid), dextrin, salt, glucose-fructose syrup, a whole milk powder, a skim milk powder, a lactic acid bacteria powder, an acidulant, alcohol, an antioxidant, caffeine, phosphorus, potassium, procyanidin B1, procyanidin B3, and fruit juice.

<<Relationship between X and Y>>

The isoelectric point (X) of the gelatin and the pH (Y) of the food or beverage satisfy the relationship of formula 1:

$$X \leq Y \quad \text{Formula 1}$$

The lower limit of "Y - X" is not especially limited, and may be, for example, 0 or more, 0.2 or more, or 0.5 or more. The upper limit of "Y - X" is not especially limited, and may be, for example, 5.0 or less, 4.0 or less, or 3.0 or less. The "Y - X" is not especially limited, and may be, for example, 0 or more and 5.0 or less, 0.2 or more and 4.0 or less, or 0.5 or more and 3.0 or less.

[Embodiment 2: Method for Producing Food or Beverage]

A method for producing a food or beverage of the present embodiment will now be described.
The method for producing a food or beverage of the present embodiment includes, in the stated order, a first step of preparing a food or beverage intermediate containing a polyphenol, and a second step of adding a collagen peptide and gelatin to the food or beverage intermediate.

<<First Step>>

The first step is performed by preparing a food or beverage intermediate containing a polyphenol. The food or beverage intermediate may be prepared through production by a conventionally known method, or may be prepared by purchasing a commercially available product.

<<Second Step>>

The second step is performed by adding a collagen peptide and gelatin to the food or beverage intermediate. Contents of the collagen peptide and the gelatin in a food or beverage can be adjusted by appropriately adjusting the amounts of the collagen peptide and the gelatin to be added. Besides, gelatin having a desired isoelectric point may be prepared through production by a conventionally known method, or may be prepared by purchasing a commercially available product. Besides, the form of the food or beverage (a beverage or jelly) can be adjusted by appropriately adjusting the amount of the gelatin to be added. In the second step, the collagen peptide and the gelatin may be simultaneously added, the gelatin may be added after adding the collagen peptide, or the collagen peptide may be added after adding the gelatin.
The second step may be performed under stirring.
The second step may be performed under a condition of 0°C or more and 100°C or less.
The second step may further include a step of adjusting the pH, and a step of sterilizing the food or beverage. When the food or beverage is jelly, the second step may further include a step of leaving the food or beverage to stand, or may further include a step of adjusting the pH, and a step of sterilizing the food or beverage. Sterilization can be performed by a conventionally known method.

Examples

Now, the present invention will be described in detail with reference to Examples, and the present invention is not limited by these Examples.

<<Production of Food or Beverage>>

[Samples 1-1 to 1-10, Samples 2 to 13, Samples 14-1 to 14-3, Samples 15 to 30, Samples 101-1 to 101-3, Samples 102 to 130, Samples 131-1, 131-2, 132-1, and 132-2]
Food or beverages of Samples 1-1 to 1-10, Samples 2 to 13, Samples 14-1 to 14-3, Samples 15 to 30, Samples 101-1 to 101-3, Samples 102 to 130, Samples 131-1, 131-2, 132-1, and 132-2 were produced as follows.
First, the following beverages were prepared as beverages containing a polyphenol (in other words, "food or beverage intermediates containing a polyphenol") by purchasing commercially available products or by performing extraction.

Unsweetened black tea (1) (polyphenol content: 0.031% by mass, collagen peptide content: 0% by mass, gelatin content: 0% by mass, pH: 5.6)

Unsweetened black tea (2) (polyphenol content: 0.200% by mass, collagen peptide content: 0% by mass, gelatin content: 0% by mass, pH: 5.6)

Sweetened black tea (polyphenol content: 0.031% by mass, collagen peptide content: 0% by mass, gelatin content: 0% by mass, pH: 5.6)

Lemon tea (polyphenol content: 0.029% by mass, collagen peptide content: 0% by mass, gelatin content: 0% by mass, pH: 5.6)

Green tea (1) (polyphenol content: 0.040% by mass, collagen peptide content: 0% by mass, gelatin content: 0% by mass, pH: 6.0)

Green tea (2) (polyphenol content: 0.040% by mass, collagen peptide content: 0% by mass, gelatin content: 0% by mass, pH: 6.4)

Black coffee (polyphenol content: 0.200% by mass, collagen peptide content: 0% by mass, gelatin content: 0% by mass, pH: 6.0)

Wine (polyphenol content: 0.400% by mass, collagen peptide content: 0% by mass, gelatin content: 0% by mass, pH: 3.2)

Grape juice (polyphenol content: 0.083% by mass, collagen peptide content: 0% by mass, gelatin content: 0% by mass, pH: 3.4)

To 100 mL each of the food or beverage intermediates containing the polyphenol listed in Tables 1-1 to 1-4, collagen peptides listed in Tables 1-1 to 1-4 and gelatin listed in Tables 2-1 to 2-4 were added so that polyphenol, collagen, and gelatin contents as listed in Tables 1-1 to 1-4 and Tables 2-1 to 2-4 could be achieved. When there was an error of $\pm 0.5$ or more from the pHs of the food or beverages listed in Tables 3-1 to 3-4, a minimum necessary amount of baking soda or vitamin C was added as needed. Additionally, for adjusting the pH to 8.5 or more, sodium hydroxide was used instead of baking soda. Thus, beverages of the respective samples were obtained.

Next, the beverage of each sample was transferred to a glass container, sterilized using an autoclave under conditions of 121°C and 7 minutes, and then the resultant was left to stand at room temperature for 7 days. In this manner, food or beverages of the respective samples were obtained.

[Table 1]

| Table 1-1 | | | | | | |
|---|---|---|---|---|---|---|
| Sample No. | Food or Beverage Intermediate containing polyphenol | | Food or Beverage | | | |
| | | | Polyphenol | Collagen Peptide | | |
| | Type | | Content [mass%] | Type | Average Molecular Weight | Content [mass%] |
| 1-1 | Unsweetened Black Tea (1) | | 0.031 | Bovine Bone-derived Alkali-treated Collagen Peptide | 5000 | 0.2 |
| 1-2 | Unsweetened Black Tea (1) | | 0.031 | Bovine Bone-derived Alkali-treated Collagen Peptide | 5000 | 0.2 |
| 1-3 | Unsweetened Black Tea (1) | | 0.031 | Bovine Bone-derived Alkali-treated Collagen Peptide | 5000 | 0.2 |
| 1-4 | Unsweetened Black Tea (1) | | 0.031 | Bovine Bone-derived Alkali-treated Collagen Peptide | 5000 | 0.2 |
| 1-5 | Unsweetened Black Tea (1) | | 0.031 | Bovine Bone-derived Alkali-treated Collagen Peptide | 5000 | 0.2 |
| 1-6 | Unsweetened Black Tea (1) | | 0.031 | Bovine Bone-derived Alkali-treated Collagen Peptide | 5000 | 0.2 |
| 1-7 | Unsweetened Black Tea (1) | | 0.031 | Bovine Bone-derived Alkali-treated Collagen Peptide | 5000 | 0.2 |
| 1-8 | Unsweetened Black Tea (1) | | 0.031 | Bovine Bone-derived Alkali-treated Collagen Peptide | 5000 | 0.2 |

(continued)

| Table 1-1 | | | | | |
|---|---|---|---|---|---|
| Sample No. | Food or Beverage Intermediate containing polyphenol | Food or Beverage | | | |
| | | Polyphenol | Collagen Peptide | | |
| | Type | Content [mass%] | Type | Average Molecular Weight | Content [mass%] |
| 1-9 | Unsweetened Black Tea (1) | 0.030 | Bovine Bone-derived Alkali-treated Collagen Peptide | 5000 | 0.2 |
| 1-10 | Unsweetened Black Tea (1) | 0.029 | Bovine Bone-derived Alkali-treated Collagen Peptide | 5000 | 0.2 |
| 101-1 | Unsweetened Black Tea (1) | 0.031 | Bovine Bone-derived Alkali-treated Collagen Peptide | 5000 | 0.2 |
| 101-2 | Unsweetened Black Tea (1) | 0.031 | Bovine Bone-derived Alkali-treated Collagen Peptide | 5000 | 0.2 |
| 101-3 | Unsweetened Black Tea (1) | 0.031 | Bovine Bone-derived Alkali-treated Collagen Peptide | 5000 | 0.2 |
| 2 | Unsweetened Black Tea (2) | 0.200 | Bovine Bone-derived Alkali-treated Collagen Peptide | 5000 | 0.2 |
| 102 | Unsweetened Black Tea (2) | 0.200 | Bovine Bone-derived Alkali-treated Collagen Peptide | 5000 | 0.2 |
| 3 | Sweetened Black Tea | 0.031 | Bovine Bone-derived Alkali-treated Collagen Peptide | 5000 | 0.2 |
| 103 | Sweetened Black Tea | 0.031 | Bovine Bone-derived Alkali-treated Collagen Peptide | 5000 | 0.2 |
| 4 | Lemon Tea | 0.029 | Bovine Bone-derived Alkali-treated Collagen Peptide | 5000 | 0.2 |
| 104 | Lemon Tea | 0.029 | Bovine Bone-derived Alkali-treated Collagen Peptide | 5000 | 0.2 |
| 5 | Green Tea (1) | 0.040 | Bovine Bone-derived Alkali-treated Collaaen Peptide | 5000 | 0.2 |
| 105 | Green Tea (1) | 0.040 | Bovine Bone-derived Alkali-treated Collagen Peptide | 5000 | 0.2 |
| 6 | Green Tea (2) | 0.040 | Bovine Bone-derived Alkali-treated Collagen Peptide | 5000 | 0.2 |
| 106 | Green Tea (2) | 0.040 | Bovine Bone-derived Alkali-treated Collagen Peptide | 5000 | 0.2 |

[Table 2]

| Table 1-2 | | | | | |
|---|---|---|---|---|---|
| Sample No. | Food or Beverage Intermediate containing Polyphenol | Food or Beverage | | | |
| | | Polyphenol | Collagen Peptide | | |
| | Type | Content [mass%] | Type | Average Molecular Weiaht | Content [mass%] |
| 7 | Black Coffee | 0.200 | Bovine Bone-derived Alkali-treated Collagen Peptide | 5000 | 0.2 |
| 107 | Black Coffee | 0.200 | Bovine Bone-derived Alkali-treated Collaoen Peptide | 5000 | 0.2 |
| 8 | Wine | 0.800 | Bovine Bone-derived Alkali-treated Collagen Peptide | 5000 | 0.2 |
| 108 | Wine | 0.800 | Bovine Bone-derived Alkali-treated Collagen Peptide | 5000 | 0.2 |
| 9 | Grape Juice | 0.083 | Bovine Bone-derived Alkali-treated Collagen Peptide | 5000 | 0.2 |
| 109 | Grape Juice | 0.083 | Bovine Bone-derived Alkali-treated Collagen Peptide | 5000 | 0.2 |
| 10 | Unsweetened Black Tea (1) | 0.031 | Bovine Bone-derived Alkali-treated Collagen Peptide | 5000 | 0.2 |
| 110 | Unsweetened Black Tea (1) | 0.031 | Bovine Bone-derived Alkali-treated Collagen Peptide | 5000 | 0.2 |
| 11 | Unsweetened Black Tea (1) | 0.031 | Bovine Bone-derived Alkali-treated Collagen Peptide | 5000 | 0.2 |
| 111 | Unsweetened Black Tea (1) | 0.031 | Bovine Bone-derived Alkali-treated Collagen Peptide | 5000 | 0.2 |
| 12 | Unsweetened Black Tea (1) | 0.031 | Bovine Bone-derived Alkali-treated Collagen Peptide | 5000 | 0.2 |
| 112 | Unsweetened Black Tea (1) | 0.031 | Bovine Bone-derived Alkali-treated Collagen Peptide | 5000 | 0.2 |
| 13 | Unsweetened Black Tea (1) | 0.031 | Bovine Bone-derived Alkali-treated Collagen Peptide | 5000 | 0.2 |
| 113 | Unsweetened Black Tea (1) | 0.031 | Bovine Bone-derived Alkali-treated Collagen Peptide | 5000 | 0.2 |
| 14-1 | Unsweetened Black Tea (1) | 0.031 | Bovine Bone-derived Alkali-treated Collagen Peptide | 5000 | 0.2 |
| 14-2 | Unsweetened Black Tea (1) | 0.031 | Bovine Bone-derived Alkali-treated Collagen Peptide | 5000 | 0.2 |
| 14-3 | Unsweetened Black Tea (1) | 0.031 | Bovine Bone-derived Alkali-treated Collagen Peptide | 5000 | 0.2 |
| 114 | Unsweetened Black Tea (1) | 0.031 | Bovine Bone-derived Alkali-treated Collagen Peptide | 5000 | 0.2 |
| 15 | Unsweetened Black Tea (1) | 0.031 | Fish-derived Acid-treated Collaoen Peptide | 5000 | 0.2 |
| 115 | Unsweetened Black Tea (1) | 0.031 | Fish-derived Acid-treated Collagen Peptide | 5000 | 0.2 |

(continued)

| Table 1-2 | | | | | |
| --- | --- | --- | --- | --- | --- |
| Sample No. | Food or Beverage Intermediate containing Polyphenol | Food or Beverage | | | |
| | | Polyphenol | Collagen Peptide | | |
| | Type | Content [mass%] | Type | Average Molecular Weiaht | Content [mass%] |
| 16 | Unsweetened Black Tea (1) | 0.031 | Pin-derived Acid-treated Collagen Peptide | 5000 | 0.2 |
| 116 | Unsweetened Black Tea (1) | 0.031 | Pig-derived Acid-treated Collagen Peptide | 5000 | 0.2 |
| 17 | Unsweetened Black Tea (1) | 0.031 | Fish-derived Acid-treated Collagen Peptide | 700 | 0.2 |
| 117 | Unsweetened Black Tea (1) | 0.031 | Fish-derived Acid-treated Collagen Peptide | 700 | 0.2 |

[Table 3]

| Table 1-3 | | | | | |
| --- | --- | --- | --- | --- | --- |
| Sample No. | Food or Beverage Intermediate containing Polyphenol | Food or Beverage | | | |
| | | Polyphenol | Collagen Peptide | | |
| | Type | Content [mass%] | Type | Average Molecular Weight | Content [mass%] |
| 18 | Unsweetened Black Tea (1) | 0.031 | Bovine Bone-derived Alkali-treated Collagen Peptide | 1600 | 0.2 |
| 118 | Unsweetened Black Tea (1) | 0.031 | Bovine Bone-derived Alkali-treated Collaoen Peptide | 1600 | 0.2 |
| 19 | Unsweetened Black Tea (1) | 0.031 | Bovine Bone-derived Alkali-treated Collagen Peptide | 2100 | 0.2 |
| 119 | Unsweetened Black Tea (1) | 0.031 | Bovine Bone-derived Alkali-treated Collagen Peptide | 2100 | 0.2 |
| 20 | Unsweetened Black Tea (1) | 0.031 | Bovine Bone-derived Alkali-treated Collagen Peptide | 4700 | 0.2 |
| 120 | Unsweetened Black Tea (1) | 0.031 | Bovine Bone-derived Alkali-treated Collagen Peptide | 4700 | 0.2 |
| 21 | Unsweetened Black Tea (1) | 0.031 | Bovine Bone-derived Alkali-treated Collagen Peptide | 8100 | 0.2 |
| 121 | Unsweetened Black Tea (1) | 0.031 | Bovine Bone-derived Alkali-treated Collagen Peptide | 8100 | 0.2 |
| 22 | Unsweetened Black Tea (1) | 0.031 | Bovine Bone-derived Alkali-treated Collagen Peptide | 9600 | 0.2 |
| 122 | Unsweetened Black Tea (1) | 0.031 | Bovine Bone-derived Alkali-treated Collagen Peptide | 9600 | 0.2 |
| 23 | Unsweetened Black Tea (1) | 0.031 | Fish-derived Acid-treated Collagen Peptide | 9600 | 0.2 |

(continued)

| Table 1-3 | | | | | |
|---|---|---|---|---|---|
| Sample No. | Food or Beverage Intermediate containing Polyphenol | Food or Beverage | | | |
| | | Polyphenol | Collagen Peptide | | |
| | Type | Content [mass%] | Type | Average Molecular Weight | Content [mass%] |
| 123 | Unsweetened Black Tea (1) | 0.031 | Fish-derived Acid-treated Collagen Peptide | 9600 | 0.2 |
| 24 | Unsweetened Black Tea (1) | 0.031 | Bovine Bone-derived Alkali-treated Collaoen Peptide | 5000 | 0.1 |
| 124 | Unsweetened Black Tea (1) | 0.031 | Bovine Bone-derived Alkali-treated Collagen Peptide | 5000 | 0.1 |
| 25 | Unsweetened Black Tea (1) | 0.031 | Bovine Bone-derived Alkali-treated Collagen Peptide | 5000 | 0.4 |
| 125 | Unsweetened Black Tea (1) | 0.031 | Bovine Bone-derived Alkali-treated Collagen Peptide | 5000 | 0.4 |
| 26 | Unsweetened Black Tea (1) | 0.031 | Bovine Bone-derived Alkali-treated Collagen Peptide | 5000 | 0.6 |
| 126 | Unsweetened Black Tea (1) | 0.031 | Bovine Bone-derived Alkali-treated Collagen Peptide | 5000 | 0.6 |
| 27 | Unsweetened Black Tea (1) | 0.031 | Bovine Bone-derived Alkali-treated Collagen Peptide | 5000 | 0.8 |
| 127 | Unsweetened Black Tea (1) | 0.031 | Bovine Bone-derived Alkali-treated Collagen Peptide | 5000 | 0.8 |
| 28 | Unsweetened Black Tea (1) | 0.031 | Bovine Bone-derived Alkali-treated Collagen Peptide | 5000 | 1.0 |
| 128 | Unsweetened Black Tea (1) | 0.031 | Bovine Bone-derived Alkali-treated Collagen Peptide | 5000 | 1.0 |
| 29 | Unsweetened Black Tea (1) | 0.029 | Bovine Bone-derived Alkali-treated Collagen Peptide | 5000 | 5.0 |
| 129 | Unsweetened Black Tea (1) | 0.030 | Bovine Bone-derived Alkali-treated Collagen Peptide | 5000 | 5.0 |

[Table 4]

| Table 1-4 | | | | | |
|---|---|---|---|---|---|
| Sample No. | Food or Beverage Intermediate containing Polyphenol | Food or Beverage | | | |
| | | Polyphenol | Collagen Peptide | | |
| | Type | Content [mass%] | Type | Average Molecular Weight | Content [mass%] |
| 30 | Unsweetened Black Tea (1) | 0.028 | Bovine Bone-derived Alkali-treated Collagen Peptide | 5000 | 10.0 |
| 130 | Unsweetened Black Tea (1) | 0.028 | Bovine Bone-derived Alkali-treated Collaoen Peptide | 5000 | 10.0 |

(continued)

| Table 1-4 | | | | | |
|---|---|---|---|---|---|
| Sample No. | Food or Beverage Intermediate containing Polyphenol | Food or Beverage | | | |
| | | Polyphenol | Collagen Peptide | | |
| | Type | Content [mass%] | Type | Average Molecular Weight | Content [mass%] |
| 131-1 | Unsweetened Black Tea (1) | 0.031 | Bovine Bone-derived Alkali-treated Collagen Peptide | 5000 | 0.2 |
| 131-2 | Unsweetened Black Tea (1) | 0.031 | Bovine Bone-derived Alkali-treated Collagen Peptide | 5000 | 0.2 |
| 132-1 | Unsweetened Black Tea (1) | 0.031 | Bovine Bone-derived Alkali-treated Collagen Peptide | 5000 | 0.2 |
| 132-2 | Unsweetened Black Tea (1) | 0.031 | Bovine Bone-derived Alkali-treated Collagen Peptide | 5000 | 0.2 |

[Table 5]

| Table 2-1 | | | | |
|---|---|---|---|---|
| Sample No. | Food or Beverage | | | |
| | Gelatin | | | |
| | Type of Gelatin | Isoelectric Point (X) | Average Molecular Weight | Content [mass%] |
| 1-1 | Bovine Bone-derived Alkali-treated Gelatin | 5.0 | 150,000 | 0.1 |
| 1-2 | Bovine Bone-derived Alkali-treated Gelatin | 5.0 | 12,000 | 0.1 |
| 1-3 | Bovine Bone-derived Alkali-treated Gelatin | 5.0 | 70,000 | 0.1 |
| 1-4 | Bovine Bone-derived Alkali-treated Gelatin | 5.0 | 250,000 | 0.1 |
| 1-5 | Bovine Bone-derived Alkali-treated Gelatin | 5.0 | 500,000 | 0.1 |
| 1-6 | Bovine Bone-derived Alkali-treated Gelatin | 5.0 | 150,000 | 0.05 |
| 1-7 | Bovine Bone-derived Alkali-treated Gelatin | 5.0 | 150,000 | 0.2 |
| 1-8 | Bovine Bone-derived Alkali-treated Gelatin | 5.0 | 150,000 | 1.0 |
| 1-9 | Bovine Bone-derived Alkali-treated Gelatin | 5.0 | 150,000 | 2.0 |
| 1-10 | Bovine Bone-derived Alkali-treated Gelatin | 5.0 | 150,000 | 5.0 |
| 101-1 | Fish-derived Acid-treated Gelatin | 8.0 | 150,000 | 0.1 |
| 101-2 | Pig-derived Acid-treated Gelatin | 8.0 | 150,000 | 0.1 |
| 101-3 | - | - | - | - |
| 2 | Bovine Bone-derived Alkali-treated Gelatin | 5.0 | 150,000 | 0.1 |
| 102 | - | - | - | - |
| 3 | Bovine Bone-derived Alkali-treated Gelatin | 5.0 | 150,000 | 0.1 |
| 103 | - | - | - | - |
| 4 | Bovine Bone-derived Alkali-treated Gelatin | 5.0 | 150,000 | 0.1 |
| 104 | - | - | - | - |
| 5 | Bovine Bone-derived Alkali-treated Gelatin | 5.0 | 150,000 | 0.1 |

(continued)

| Table 2-1 | | | | |
|---|---|---|---|---|
| Sample No. | Food or Beverage | | | |
| | Gelatin | | | |
| | Type of Gelatin | Isoelectric Point (X) | Average Molecular Weight | Content [mass%] |
| 105 | - | - | - | - |
| 6 | Bovine Bone-derived Alkali-treated Gelatin | 5.0 | 150,000 | 0.1 |
| 106 | - | - | - | - |

[Table 6]

| Table 2-2 | | | | |
|---|---|---|---|---|
| Sample No. | Food or Beverage | | | |
| | Gelatin | | | |
| | Type of Gelatin | Isoelectric Point (X) | Average Molecular Weight | Content [mass%] |
| 7 | Bovine Bone-derived Alkali-treated Gelatin | 5.0 | 150,000 | 0.1 |
| 107 | - | - | - | - |
| 8 | Bovine Bone-derived Alkali-treated Gelatin | 5.0 | 150,000 | 0.1 |
| 108 | - | - | - | - |
| 9 | Bovine Bone-derived Alkali-treated Gelatin | 5.0 | 150,000 | 0.1 |
| 109 | - | - | - | - |
| 10 | Bovine Bone-derived Alkali-treated Gelatin | 5.0 | 150,000 | 0.1 |
| 110 | - | - | - | - |
| 11 | Bovine Bone-derived Alkali-treated Gelatin | 5.0 | 150,000 | 0.1 |
| 111 | - | - | - | - |
| 12 | Bovine Bone-derived Alkali-treated Gelatin | 5.0 | 150,000 | 0.1 |
| 112 | - | - | - | - |
| 13 | Bovine Bone-derived Alkali-treated Gelatin | 5.0 | 150,000 | 0.1 |
| 113 | - | - | - | - |
| 14-1 | Bovine Bone-derived Alkali-treated Gelatin | 5.0 | 150,000 | 0.1 |
| 14-2 | Fish-derived Acid-treated Gelatin | 8.0 | 150,000 | 0.1 |
| 14-3 | Pig-derived Acid-treated Gelatin | 8.0 | 150,000 | 0.1 |
| 114 | - | - | - | - |
| 15 | Bovine Bone-derived Alkali-treated Gelatin | 5.0 | 150,000 | 0.1 |
| 115 | - | - | - | - |
| 16 | Bovine Bone-derived Alkali-treated Gelatin | 5.0 | 150,000 | 0.1 |
| 116 | - | - | - | - |
| 17 | Bovine Bone-derived Alkali-treated Gelatin | 5.0 | 150,000 | 0.1 |
| 117 | - | - | - | - |

[Table 7]

Table 2-3

| Sample No. | Food or Beverage | | | |
| --- | --- | --- | --- | --- |
| | Gelatin | | | |
| | Type of Gelatin | Isoelectric Point (X) | Average Molecular Weight | Content [mass%] |
| 18 | Bovine Bone-derived Alkali-treated Gelatin | 5.0 | 150,000 | 0.1 |
| 118 | - | - | - | - |
| 19 | Bovine Bone-derived Alkali-treated Gelatin | 5.0 | 150,000 | 0.1 |
| 119 | - | - | - | - |
| 20 | Bovine Bone-derived Alkali-treated Gelatin | 5.0 | 150,000 | 0.1 |
| 120 | - | - | - | - |
| 21 | Bovine Bone-derived Alkali-treated Gelatin | 5.0 | 150,000 | 0.1 |
| 121 | - | - | - | - |
| 22 | Bovine Bone-derived Alkali-treated Gelatin | 5.0 | 150,000 | 0.1 |
| 122 | - | - | - | - |
| 23 | Bovine Bone-derived Alkali-treated Gelatin | 5.0 | 150,000 | 0.1 |
| 123 | - | - | - | - |
| 24 | Bovine Bone-derived Alkali-treated Gelatin | 5.0 | 150,000 | 0.1 |
| 124 | - | - | - | - |
| 25 | Bovine Bone-derived Alkali-treated Gelatin | 5.0 | 150,000 | 0.1 |
| 125 | - | - | - | - |
| 26 | Bovine Bone-derived Alkali-treated Gelatin | 5.0 | 150,000 | 0.1 |
| 126 | - | - | - | - |
| 27 | Bovine Bone-derived Alkali-treated Gelatin | 5.0 | 150,000 | 0.1 |
| 127 | - | - | - | - |
| 28 | Bovine Bone-derived Alkali-treated Gelatin | 5.0 | 150,000 | 0.1 |
| 128 | - | - | - | - |
| 29 | Bovine Bone-derived Alkali-treated Gelatin | 5.0 | 150,000 | 0.1 |
| 129 | - | - | - | - |

[Table 8]

Table 2-4

| Sample No. | Food or Beverage | | | |
| --- | --- | --- | --- | --- |
| | Gelatin | | | |
| | Type of Gelatin | Isoelectric Point (X) | Average Molecular Weight | Content [mass%] |
| 30 | Bovine Bone-derived Alkali-treated Gelatin | 5.0 | 150,000 | 0.1 |
| 130 | - | - | - | - |
| 131-1 | Bovine Bone-derived Alkali-treated Gelatin | 5.0 | 150,000 | 0.1 |
| 131-2 | - | - | - | - |
| 132-1 | Bovine Bone-derived Alkali-treated Gelatin | 5.0 | 150,000 | 5.0 |

(continued)

| Table 2-4 | | | | |
|---|---|---|---|---|
| Sample No. | Food or Beverage | | | |
| | Gelatin | | | |
| | Type of Gelatin | Isoelectric Point (X) | Average Molecular Weight | Content [mass%] |
| 132-2 | - | - | - | - |

[Table 9]

| Table 3-1 | | | | | |
|---|---|---|---|---|---|
| Sample No. | Food or Beverage | | | | |
| | Beverage/ Jelly | pH (Y) of Food or Beverage | Y-X | Cloudiness | Flavor |
| 1-1 | Beverage | 6.0 | 1.0 | not cloudy | A |
| 1-2 | Beverage | 6.0 | 1.0 | not cloudy | A |
| 1-3 | Beverage | 6.0 | 1.0 | not cloudy | A |
| 1-4 | Beverage | 6.0 | 1.0 | not cloudy | A |
| 1-5 | Beverage | 6.0 | 1.0 | not cloudy | A |
| 1-6 | Beverage | 6.0 | 1.0 | not cloudy | A |
| 1-7 | Beverage | 6.0 | 1.0 | not cloudy | A |
| 1-8 | Jelly | 6.0 | 1.0 | not cloudy | A |
| 1-9 | Jelly | 6.0 | 1.0 | not cloudy | A |
| 1-10 | Jelly | 6.0 | 1.0 | not cloudy | A |
| 101-1 | Beverage | 6.0 | -2.0 | cloudy | B |
| 101-2 | Beverage | 6.0 | -2.0 | cloudy | B |
| 101-3 | Beverage | 6.0 | - | cloudy | - |
| 2 | Beverage | 6.0 | 1.0 | not cloudy | A |
| 102 | Beverage | 6.0 | - | cloudy | - |
| 3 | Beverage | 6.0 | 1.0 | not cloudy | A |
| 103 | Beverage | 6.0 | - | cloudy | - |
| 4 | Beverage | 6.0 | 1.0 | not cloudy | A |
| 104 | Beverage | 6.0 | - | cloudy | - |
| 5 | Beverage | 6.0 | 1.0 | not cloudy | A |
| 105 | Beverage | 6.0 | - | cloudy | - |
| 6 | Beverage | 6.0 | 1.0 | not cloudy | A |
| 106 | Beverage | 6.0 | - | cloudy | - |

[Table 10]

| Table 3-2 | | | | | |
|---|---|---|---|---|---|
| Sample No. | Food or Beverage | | | | |
| | Beverage/ Jelly | pH (Y) of Food or Beverage | Y-X | Cloudiness | Flavor |
| 7 | Beverage | 6.0 | 1.0 | not cloudy | A |
| 107 | Beverage | 6.0 | - | cloudy | - |

(continued)

| Table 3-2 | | | | | |
| --- | --- | --- | --- | --- | --- |
| Sample No. | Food or Beverage | | | | |
| | Beverage/ Jelly | pH (Y) of Food or Beverage | Y-X | Cloudiness | Flavor |
| 8 | Beverage | 6.0 | 1.0 | not cloudy | A |
| 108 | Beverage | 6.0 | - | cloudy | - |
| 9 | Beverage | 6.0 | 1.0 | not cloudy | A |
| 109 | Beverage | 6.0 | - | cloudy | - |
| 10 | Beverage | 5.0 | 0 | not cloudy | A |
| 110 | Beverage | 5.0 | - | cloudy | - |
| 11 | Beverage | 7.0 | 2.0 | not cloudy | A |
| 111 | Beverage | 7.0 | - | cloudy | - |
| 12 | Beverage | 8.0 | 3.0 | not cloudy | A |
| 112 | Beverage | 8.0 | - | not cloudy | - |
| 13 | Beverage | 9.0 | 4.0 | not cloudy | A |
| 113 | Beverage | 9.0 | - | not cloudy | - |
| 14-1 | Beverage | 10.0 | 5.0 | not cloudy | A |
| 14-2 | Beverage | 10.0 | 2.0 | not cloudy | A |
| 14-3 | Beverage | 10.0 | 2.0 | not cloudy | A |
| 114 | Beverage | 10.0 | - | not cloudy | - |
| 15 | Beverage | 6.0 | 1.0 | not cloudy | A |
| 115 | Beverage | 6.0 | - | cloudy | - |
| 16 | Beverage | 6.0 | 1.0 | not cloudy | A |
| 116 | Beverage | 6.0 | - | cloudy | - |
| 17 | Beverage | 6.0 | 1.0 | not cloudy | A |
| 117 | Beverage | 6.0 | - | cloudy | - |

[Table 11]

| Table 3-3 | | | | | |
| --- | --- | --- | --- | --- | --- |
| Sample No. | Food or Beverage | | | | |
| | Beverage/ Jelly | pH (Y) of Food or Beverage | Y-X | Cloudiness | Flavor |
| 18 | Beverage | 6.0 | 1.0 | not cloudy | A |
| 118 | Beverage | 6.0 | - | cloudy | - |
| 19 | Beverage | 6.0 | 1.0 | not cloudy | A |
| 119 | Beverage | 6.0 | - | cloudy | - |
| 20 | Beverage | 6.0 | 1.0 | not cloudy | A |
| 120 | Beverage | 6.0 | - | cloudy | - |
| 21 | Beverage | 6.0 | 1.0 | not cloudy | A |
| 121 | Beverage | 6.0 | - | cloudy | - |
| 22 | Beverage | 6.0 | 1.0 | not cloudy | A |
| 122 | Beverage | 6.0 | - | cloudy | - |

(continued)

| Table 3-3 | | | | | |
|---|---|---|---|---|---|
| Sample No. | Food or Beverage | | | | |
| | Beverage/ Jelly | pH (Y) of Food or Beverage | Y-X | Cloudiness | Flavor |
| 23 | Beverage | 6.0 | 1.0 | not cloudy | A |
| 123 | Beverage | 6.0 | - | cloudy | - |
| 24 | Beverage | 6.0 | 1.0 | not cloudy | A |
| 124 | Beverage | 6.0 | - | cloudy | - |
| 25 | Beverage | 6.0 | 1.0 | not cloudy | A |
| 125 | Beverage | 6.0 | - | cloudy | - |
| 26 | Beverage | 6.0 | 1.0 | not cloudy | A |
| 126 | Beverage | 6.0 | - | cloudy | - |
| 27 | Beverage | 6.0 | 1.0 | not cloudy | A |
| 127 | Beverage | 6.0 | - | cloudy | - |
| 28 | Beverage | 6.0 | 1.0 | not cloudy | A |
| 128 | Beverage | 6.0 | - | cloudy | - |
| 29 | Beverage | 6.0 | 1.0 | not cloudy | A |
| 129 | Beverage | 6.0 | - | not cloudy | - |

[Table 12]

| Table 3-4 | | | | | |
|---|---|---|---|---|---|
| Sample No. | Food or Beverage | | | | |
| | Beverage/ Jelly | pH (Y) of Food or Beverage | Y-X | Cloudiness | Flavor |
| 30 | Beverage | 6.0 | 1.0 | not cloudy | A |
| 130 | Beverage | 6.0 | - | not cloudy | - |
| 131-1 | Beverage | 4.0 | -1.0 | cloudy | B |
| 131-2 | Beverage | 4.0 | - | cloudy | - |
| 132-1 | Beverage | 4.0 | -1.0 | cloudy | B |
| 132-2 | Beverage | 4.0 | - | cloudy | - |

<<Evaluation of Properties of Food or Beverage>>

<Cloudiness Evaluation Test>

The food or beverages of the respective samples were visually observed to evaluate whether or not the food or beverages were cloudy. The obtained results are shown in a column of "Cloudiness" in Tables 3-1 to 3-4.

The food or beverages of Samples 1-1 to 1-10, Samples 2 to 13, Samples 14-1 to 14-3, and Samples 15 to 30 correspond to Examples. The food or beverages of Samples 101-1 to 101-3, Samples 102 to 130, Samples 131-1, 131-2, 132-1, and 132-2 correspond to Comparative Examples. It was found that the cloudiness is remarkably suppressed in the food or beverages of Samples 1-1 to 1-10, Samples 2 to 13, Samples 14-1 to 14-3, and Samples 15 to 30 compared to the food or beverages of Samples 101-1 to 101-3, Samples 102 to 111, Samples 115 to 128, Samples 131-1, 131-2, 132-1, and 132-2.

<Flavor Evaluation Test>

For the beverage of each sample, five male and female panelists in their 20s to 50s conducted a sensory evaluation regarding "flavor" according to the following evaluation criteria. The obtained results are shown in a column of "Flavor" in Tables 3-1 to 3-4. In the column of "Flavor" of Tables 3-1 to 3-4, an entry of "A" means that the flavor was good, and in the column of "Flavor" of Tables 3-1 to 3-4, an entry of "B" or "-" means that the flavor was not good. A sample of a "gelatin-free product" according to the following evaluation criteria correspond to Samples 101-3 to 131, 132-2, and 133-2. A sample of a "gelatin-free product" corresponding to Samples 1-1 to 1-10, 101-1 and 101-2 is Sample 101-3. A sample of a "gelatin-free product" corresponding to Sample 2 is Sample 102. A sample of a "gelatin-free product" corresponding to Sample 3 is Sample 103. A sample of a "gelatin-free product" corresponding to Sample 4 is Sample 104. A sample of a "gelatin-free product" corresponding to Sample 5 is Sample 105. A sample of a "gelatin-free product" corresponding to Sample 6 is Sample 106. A sample of a "gelatin-free product" corresponding to Sample 7 is Sample 107. A sample of a "gelatin-free product" corresponding to Sample 8 is Sample 108. A sample of a "gelatin-free product" corresponding to Sample 9 is Sample 109. A sample of a "gelatin-free product" corresponding to Sample 10 is Sample 110. A sample of a "gelatin-free product" corresponding to Sample 11 is Sample 111. A sample of a "gelatin-free product" corresponding to Sample 12 is Sample 112. A sample of a "gelatin-free product" corresponding to Sample 13 is Sample 113. A sample of a "gelatin-free product" corresponding to Samples 14-1 to 14-3 is Sample 114. A sample of a "gelatin-free product" corresponding to Sample 15 is Sample 115. A sample of a "gelatin-free product" corresponding to Sample 16 is Sample 116. A sample of a "gelatin-free product" corresponding to Sample 17 is Sample 117. A sample of a "gelatin-free product" corresponding to Sample 18 is Sample 118. A sample of a "gelatin-free product" corresponding to Sample 19 is Sample 119. A sample of a "gelatin-free product" corresponding to Sample 20 is Sample 120. A sample of a "gelatin-free product" corresponding to Sample 21 is Sample 121. A sample of a "gelatin-free product" corresponding to Sample 22 is Sample 122. A sample of a "gelatin-free product" corresponding to Sample 23 is Sample 123. A sample of a "gelatin-free product" corresponding to Sample 24 is Sample 124. A sample of a "gelatin-free product" corresponding to Sample 25 is Sample 125. A sample of a "gelatin-free product" corresponding to Sample 26 is Sample 126. A sample of a "gelatin-free product" corresponding to Sample 27 is Sample 127. A sample of a "gelatin-free product" corresponding to Sample 28 is Sample 128. A sample of a "gelatin-free product" corresponding to Sample 29 is Sample 129. A sample of a "gelatin-free product" corresponding to Sample 30 is Sample 130. A sample of a "gelatin-free product" corresponding to Sample 131-1 is Sample 131-2. A sample of a "gelatin-free product" corresponding to Sample 132-1 is Sample 132-2.

(Evaluation Criteria)

A: The number of panelists who evaluated the sample as having a collagen peptide-derived flavor suppressed compared to the sample of a "gelatin-free product", and having a flavor closer to that of the food or beverage intermediate containing the polyphenol was three or more.

B: The number of panelists who evaluated the sample as having a collagen peptide-derived flavor suppressed compared to the sample of a "gelatin-free product", and having a flavor closer to that of the food or beverage intermediate containing the polyphenol was less than three.

It was found that the food or beverages of Samples 1-1 to 1-10, Samples 2 to 13, Samples 14-1 to 14-3, and Samples 15 to 30 had a remarkably good flavor compared to the food or beverages of Samples 101-1 to 101-3, Samples 102 to 130, Samples 131-1, 131-2, 132-1, and 132-2.

In this manner, it was found that the food or beverages of Samples 1-1 to 1-10, Samples 2 to 13, Samples 14-1 to 14-3, and Samples 15 to 30 were remarkably suppressed in the cloudiness, and in addition, had a remarkably good flavor.

The embodiments and examples of the present disclosure have been explained so far, and it is also planned from the outset to appropriately combine and variously modify the configurations of the above-mentioned embodiments and examples.

The embodiments and examples disclosed herein are to be considered in all respects as illustrative and not restrictive. The scope of the present invention is indicated by the appended claims, not by the embodiments and examples described above, and is intended to include all modifications within the meaning and scope equivalent to the appended claims.

**Claims**

1.    A food or beverage comprising a polyphenol, and a collagen peptide, and further comprising gelatin, wherein an isoelectric point (X) of the gelatin and a pH (Y) of the food or beverage satisfy a relationship of the following formula 1:

$$X \leq Y \quad \text{Formula 1}$$

2. The food or beverage according to claim 1, wherein an average molecular weight of the collagen peptide is 700 or more and 9,600 or less.

3. The food or beverage according to claim 1 or 2, wherein an average molecular weight of the gelatin is 12,000 or more and 500,000 or less.

4. The food or beverage according to claim 1 or 2, wherein a content of the polyphenol is more than 0% by mass and 1.0% by mass or less.

5. The food or beverage according to claim 1 or 2, wherein a content of the collagen peptide is more than 0% by mass and 10.0% by mass or less.

6. The food or beverage according to claim 1 or 2, wherein a content of the gelatin is more than 0% by mass and 5.0% by mass or less.

7. The food or beverage according to claim 1 or 2,

   wherein the X is 4.8 or more and 10.0 or less, and
   the Y is 4.8 or more.

8. The food or beverage according to claim 1 or 2,

   wherein the polyphenol is a plant-derived polyphenol, and
   the plant-derived polyphenol is selected from the group consisting of oleuropein, flavonoid, phenolic acid, ellagic acid, lignan, curcumin, and coumarin.

9. The food or beverage according to claim 1 or 2, wherein the food or beverage is a beverage or jelly.

10. The food or beverage according to claim 9, wherein the beverage is selected from the group consisting of black tea, green tea, coffee, wine, and grape juice.

## INTERNATIONAL SEARCH REPORT

| International application No. |
| --- |
| **PCT/JP2024/030641** |

### A. CLASSIFICATION OF SUBJECT MATTER

*A23L 29/281*(2016.01)i; *A23F 3/16*(2006.01)i; *A23F 5/24*(2006.01)i; *A23L 2/52*(2006.01)i; *A23L 2/66*(2006.01)i; *A23L 2/70*(2006.01)i; *A23L 5/00*(2016.01)i; *A23L 33/18*(2016.01)i; *C12G 1/00*(2019.01)i; *C12G 3/04*(2019.01)i
FI: A23L29/281; A23L2/00 J; A23L2/00 K; A23L2/52; A23L5/00 M; A23L33/18; A23F3/16; A23F5/24; C12G1/00; C12G3/04

According to International Patent Classification (IPC) or to both national classification and IPC

### B. FIELDS SEARCHED

Minimum documentation searched (classification system followed by classification symbols)

A23L29/281; A23F3/16; A23F5/24; A23L2/52; A23L2/66; A23L2/70; A23L5/00; A23L33/18; C12G1/00; C12G3/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); FSTA/CAplus/AGRICOLA/BIOSIS/MEDLINE/EMBASE (STN)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-154758 A (NITTA GELATIN KK) 27 August 2015 (2015-08-27) examples, claims | 1-10 |
| A | JP 2019-10087 A (KIRIN CO., LTD.) 24 January 2019 (2019-01-24) examples, claims | 1-10 |
| A | JP 2019-62771 A (KIRIN CO., LTD.) 25 April 2019 (2019-04-25) examples, claims | 1-10 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 October 2024** | **05 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/030641**

| Patent document cited in search report | | | Publication date (day/month/year) | Patent family member(s) | Publication date (day/month/year) |
|---|---|---|---|---|---|
| JP | 2015-154758 | A | 27 August 2015 | (Family: none) | |
| JP | 2019-10087 | A | 24 January 2019 | (Family: none) | |
| JP | 2019-62771 | A | 25 April 2019 | (Family: none) | |

Form PCT/ISA/210 (patent family annex) (July 2022)

**REFERENCES CITED IN THE DESCRIPTION**

**Patent documents cited in the description**

- JP 2019062771 A
- JP 2015154758 A
- JP 2008079565 A

- JP 2019010087 A
- JP 2002027957 A
- JP 2002051734 A